# EUROPEAN PATENT SPECIFICATION

(11) **EP 1 745 694 B1**
(45) Date of publication and mention of the grant of the patent: **30.07.2008**
(21) Application number: 05748687.0
(22) Date of filing: 10.05.2005
(51) Int. Cl.: A01K 23/00

(54) **EXCREMENT COLLECTION AND ANTI-MATING DEVICE FOR DOGS**
VORRICHTUNG ZUM AUFSAMMELN VON HUNDEKOT UND ZUR VERHINDERUNG DER PAARUNG VON HUNDEN
DISPOSITIF ANTI-ACCOUPLEMENT ET RECUPERATEUR D'EXCREMENTS POUR CHIENS

(30) Priority: 11.05.2004 ES 200401121 U
(43) Date of publication of application: 24.01.2007
(73) Proprietor: Usechi Goni, Ignacio Matias, 31180 Cizur Mayor (ES)
(72) Inventor: Usechi Goni, Ignacio Matias, 31180 Cizur Mayor (ES)
(74) Representative: Bérogin, Francis
(86) International application number: PCT/ES2005/000249
(87) International publication number: WO 2005/107446

(56) References cited:
- WO-A1-00/65906
- ES-A1- 2 110 371
- ES-A1- 2 217 984
- ES-U- 1 056 644
- FR-A1- 2 506 561
- GB-A- 2 238 454

## Description

### Field of the Art

The present invention relates to an excrement collector, especially applicable to dogs, formed as a container which allows receiving the excrement during the defecations of the animal without them falling to the ground, and also serving as an anticopulation protector for female dogs.

### State of the Art

The current problem of excrement deposition in public roads by dogs, the proliferation of which is greater every day, is well known and makes the pedestrian passage in certain areas difficult, giving rise to hygienic and sanitary type problems.

The establishment of specific areas intended for that purpose has been tried in order to lessen said problem, however, the places so habilitated are scarce and generally have little acceptance.

Many types of excrement collector devices which collect excrement once they have been deposited in the ground have been developed in that respect, telescopic handle collectors, bags with additional helping elements, collectors provided with a bag etc. being known in such sense, which solutions have the drawback of the handling which must be carried out to collect the excrement, with the problems that this may cause for many users, in addition to the fact that such means leave excrement remains on the ground in many occasions.

Solutions based on elements coupled to dogs in the form of containers such as diapers or harnesses for securing containers receiving the excrement during defecation itself are also known. The existing solutions in this sense are generally difficult to place and do not establish a suitable securing on the animal, which makes them deficient in the use for the expected function.

### Object of the Invention

According to the present invention, a dog excrement collector is proposed which offers an embodiment in the form of a receiving container intended to be incorporated on the animal, with notably advantageous constructive and functional features compared to the known solutions of the same application.

This collector object of the invention is formed by a laminar body provided with fastening elements and a wide orifice in its central area, said laminar body being complemented by two securing bands fixed on the fastening elements and a container in the form of a disposable bag incorporated with respect to the central orifice.

Like the securing bands, the laminar body can be of any flexible material offering a suitable resistance, preferably being of an impermeable nature and with anti-allergic properties.

The fixing of the bands on the laminar body is provided in a diagonally crossing arrangement, allowing a perfect securing of the collector on the animal for which it is intended, with the possibility of easy assembly thanks to the detachable fastening fixings, the bands being able to incorporate multiple elements for the fastening, with the possibility of adjusting the assembly for the adaptation according to the size of the animal.

The central orifice of the quadrangular body is provided with a slot in the edge in the form of a partial guide, whereas the disposable container incorporates a flexible ring in the edge of the opening, which ring can be fitted by elastic deformation and recovery and retained with respect to said guide of the orifice of the quadrangular body, allowing a coupling that can be easily assembled and disassembled for the arrangement for use and the substitution. The incorporation of a loop serving as a pulling element is further envisaged in the edge of the opening of the container, by means of which loop the disassembling extraction for the substitution of said container is facilitated.

According to its arrangement for use, a notch for the adjustment with respect to the tail of the animal is defined in the upper edge of the laminar body, a clasp being incorporated with respect to said notch, which clasp is also fixed by a detachable secured fastening and with which a securing closure is provided on the tail of the animal ensuring the stability of the collector assembly.

A flange can further be optionally incorporated, also by a detachable secured fastening, in the lower edge of the quadrangular body, which skirt allows an anticopulation function in the case of female animals, by means of the excrement collector itself.

For all of the above, said collector object of the invention certainly results in very advantageous features, acquiring feasibility and preferably applied with respect to other devices of the same function.

### Description of the Drawings

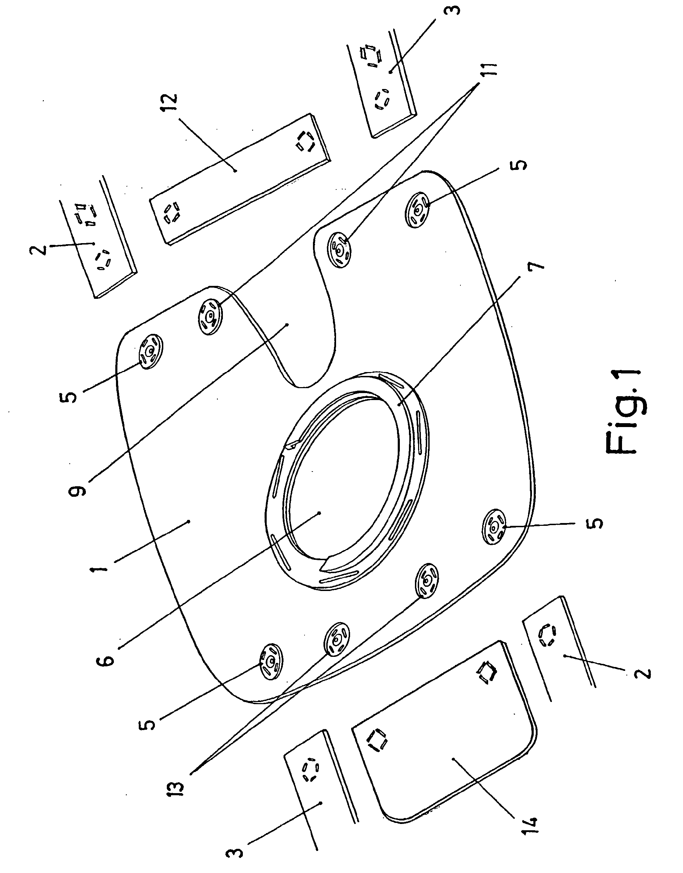

Figure 1 shows an exploded perspective view of the proposed excrement collector in a planar arrangement of the component assembly.
Figure 2 is a perspective view of the collector in the assembled position of the component assembly.

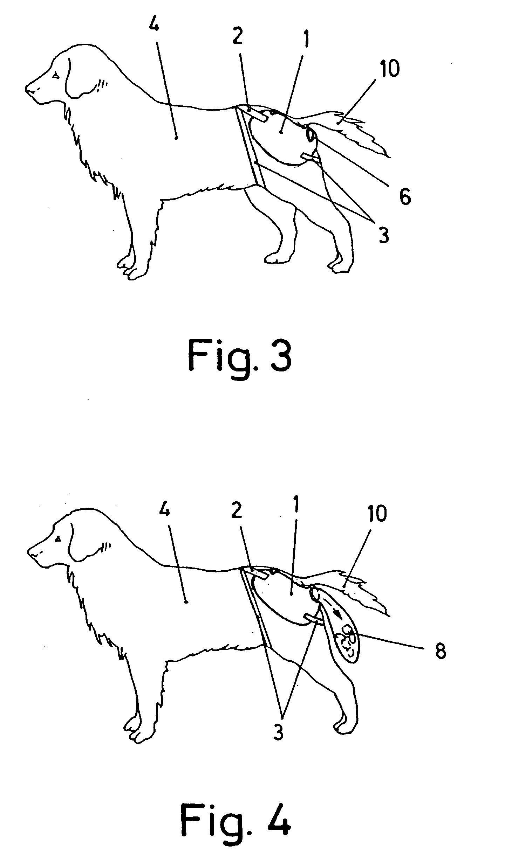

Figure 3 shows a side view of the arrangement for the application of the collector in a dog, without the excrement receiving container.
Figure 4 shows a view like the previous one with the excrement receiving container incorporated in the collector.

### Detailed Description of the Invention

The object of the present invention relates to an excrement collector for dogs, comprising an assembly formed as a harness for coupling the assembly on the animal for collecting the excrement directly during defecation.

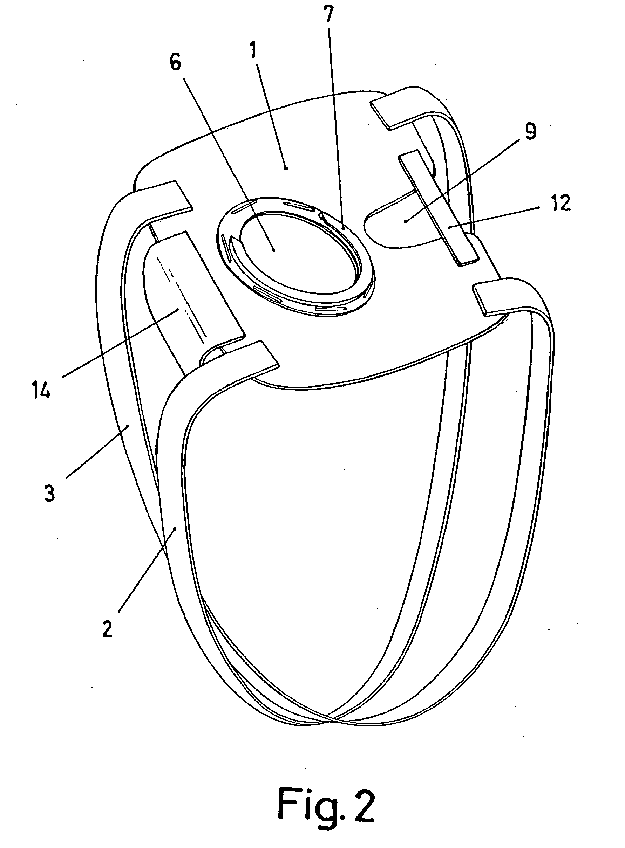

Said collector consists of a body (1) of a laminar nature and bands (2 and 3) in the form of straps incorporated in a diagonally crossing arrangement with respect to the body (1), as shown in figure 2, all of this forming an assembly which can be assembled and secured on the dog (4) for which the application is intended.

In order to secure the bands (2 and 3), the body (1) is provided with fastening elements (5), with respect to which the bands (2 and 3) can be detachably fixed by means of corresponding reciprocal fastening elements incorporated by said bands (2 and 3) in their ends.

It is particularly envisaged that the mentioned bands (2 and 3) are provided with several fastening elements in at least one of the ends, thus allowing the adaptation of the collector assembly according to the size of the dog (4).

The laminar body (1) has an orifice (6) in the central area, such that in the application assembly said body (2) is arranged on the rear part of the dog (4), the orifice (6) being in the area of the anus thereof, whereas the fixing is provided with the bands (2 and 3) passing them from one side to the other from the upper part to the lower part inside the legs.

In this arrangement and thanks to the crossed position of the bands (2 and 3), a stable securing of the application assembly on the dog (4) is achieved, whereas the detachable fixing of the bands (2 and 3) on the fastening elements (5) allows carrying out the assembly quickly and easily.

The orifice (6) incorporates an edge (7) in the form of a guide extending partially in the outline, determining a slot for the coupling of a container (8) in the form of a bag intended to collect the excrement of the dog (4).

The container (8) is preferably of an impermeable material and is provided in the opening with a semirigid ring, by means of which a coupling insertion can be provided in the slot determined by the edge (7) of the orifice (6) of the body (1) for the application arrangement in which said container (8) is in correspondence with the orifice (6) so as to receive the excrement of the dog (4) directly during defecation.

The assembly of the container (8) on the coupling edge (7) is carried out by the elastic deformation of the ring of the opening of said container (8) for the insertion in the guide determining the edge (7), in which guide a retention slot is provided by means of the elastic recovery of said ring of the opening of the container (8).

For the function of the assembly of the container (8) in the application arrangement, the securing semirigid ring on the edge (7) can be incorporated in a fixed manner on the edge of the opening of the container (8), being disposable with it, but it can also be an independent element used for securing the successive containers (8) used.

The container can therefore be incorporated on the dog (4), so that the latter carries it such that the container (8) is arranged on the body (1), so that when the dog (4) defecates, the excrement end up in said container (8) without falling to the ground, so the owner of the animal only has to withdraw the container (8) in order to eliminate the excrement.

The container (8) is disposable, such that when it is withdrawn to eliminate the excrement, another identical container can be incorporated in its place for a subsequent defecation of the dog (4). In order to facilitate the extraction during disassembly with respect to the coupling on the body (1) of the collector, it is envisaged that the disposable containers (8) are provided with a loop in the form of a pulling element or any other similar form in the edge of the opening allowing to easily carry out the pulling force for the disassembly.

According to the position of the application assembly, the laminar body (1) determines in the upper edge a notch (8) for the passage of the tail (10) of the dog (4), therefore a better adjustment of the placing of the collector in its application, as well as a greater comfort for the dog (4) in use is achieved.

At the sides of the mentioned notch (9), the body further incorporates respective fastening elements (11), with respect to which a clasp (12) is fixed by means of corresponding reciprocal elements, therefore a securing closure is provided on the tail (10) of the animal, thus better ensuring the stability of the application assembly of the collector.

Other fastening elements (13) are arranged in the lower part of the body (1), on which a flange (14) can be incorporated provisionally, by means of which flange the collector can further serve for an anticopulation function to protect female dogs when they are in heat.

## Claims

1. An anticopulation and excrement collector device for dogs, of the type formed as a harness to be assembled on the dog (4) so as to arrange a disposable container (8) for collecting the excrement directly during defecation, comprising a laminar body (1), provided with a central orifice (6), with fastening elements (5) on which bands (2 and 3) acting as securing straps are fixed, which bands are arranged diagonally crossing each other with respect to the body (1), **characterized in that** according to the assembled position, the body (1) determines at the upper edge a notch (9) for the passage of the tail (10) of the dog (4), incorporating fastening elements (11) at the sides of said notch (9), with respect to which fastening elements a clasp (12) establishing a securing closure on the tail (10) of the dog (4) is secured.

2. An anticopulation and excrement collector device for dogs according to claim 1, **characterized in that** the central orifice (6) of the body (1) incorporates an edge (7) determining a slot in the form of a guide partially in the outline of the mentioned orifice (6), with respect to which there is coupled a container (8) in the form of a bag having a semirigid ring in the opening so as to be fitted by elastic deformation with respect to the edge (7) in the assembly.

3. An anticopulation and excrement collector device for dogs according to claim 1, **characterized in that** according to the assembled position, in the lower part the body (1) incorporates fastening elements (13), with respect to which a flange (14) can be fixed provisionally for the anticopulation protection of female dogs (4).

## Patentansprüche

1. Antikopulations- und Exkrementsammelvorrichtung für Hunde mit einer solchen Bauart, welche als ein Traggurt ausgebildet ist, welches am Hund (4) derart angebracht werden kann, dass ein Einwegbehälter (8) zum Sammeln des Exkrements direkt während der Darmentleerung angeordnet ist, wobei die Vorrichtung einen flächigen Körper (1) aufweist, welcher mit einer zentralen Öffnung (6) sowie mit Befestigungselementen (5) versehen ist, an welchen Bänder (2 und 3) als Befestigungsbänder fest angebracht sind, wobei die Bänder derart angeordnet sind, dass sie sich diagonal bezüglich des Körpers (1) kreuzen, **dadurch gekennzeichnet, dass** in der angeordneten Position der Körper (1) am oberen Rand eine Ausnehmung (9) für den Durchgang des Schwanzes (10) des Hundes (4) bildet, und Befestigungselemente (11) an den Seiten der Ausnehmung (9) vorgesehen sind, die im Zusammenwirken mit einer Zunge (12) einen Befestigungsverschluss bilden, mittels dem die Vorrichtung fest am Schwanz (10) des Hundes (4) angebracht ist.

2. Antikopulations- und Exkrementsammelvorrichtung für Hunde nach Anspruch 1, **dadurch gekennzeichnet, dass** die Mittelöffnung (6) des Körpers (1) einen Rand (7) umfasst, welcher einen Schlitz in Form einer Führung teilweise im Umfang der angegebenen Öffnung (6) bildet, mit der ein Behälter (8) in Form eines Beutels verbunden ist, welcher einen halbstarren Ring derart in der Öffnung hat, dass er durch elastische Verformung bezüglich des Randes (7) bei der Montage in Passsitz gebracht werden kann.

3. Antikopulations- und Exkrementsammelvorrichtung für Hunde nach Anspruch 1, **dadurch gekennzeichnet, dass** in der montierten Position im unteren Teil des Körpers (1) Befestigungselemente (13) vorgesehen sind, mittels denen ein Flansch (14) bedarfsabhängig als Antikopulationsschutz für weibliche Hunde (4) befestigt werden kann.

## Revendications

1. Dispositif anti-accouplement et collecteur d'excréments pour chiens du type constitué d'un harnais devant être installé sur le chien (4) de manière à disposer un récipient (8) jetable pour recueillir les excréments directement pendant la défécation, comprenant un corps laminaire (1), muni d'un orifice central (6), avec des éléments de fixation (5) sur lesquels des bandes (2 et 3) servant de sangles de sécurité sont fixées, lesdites bandes sont disposées en diagonale et se croisent l'une l'autre par rapport au corps (1), **caractérisé en ce que**, en fonction de la position assemblée, le corps (1) détermine sur le bord supérieur une encoche (9) pour le passage de la queue (10) du chien (4), incorporant des éléments de fixation (5) sur les côtés de ladite encoche (9), éléments de fixation par rapport auxquels une agrafe (12) créant une fermeture de sécurité sur la queue (10) du chien (4) est fixée.

2. Dispositif anti-accouplement et collecteur d'excréments pour chiens selon la revendication 1, **caractérisé en ce que** l'orifice central (6) du corps (1) incorpore un bord (7) déterminant une fente ayant la forme d'un guide prenant partiellement le contour de l'orifice (6) mentionné, par rapport à laquelle un récipient (8) est couplé qui a la forme d'un sac ayant une bague semi-rigide dans l'ouverture afin d'être mis en pace par déformation élastique par rapport au bord (7) pendant l'assemblage.

3. Dispositif anti-accouplement et collecteur d'excréments pour chiens selon la revendication 1, **caractérisé en ce que**, en fonction de la position assemblée, dans la partie inférieure le corps (1) incorpore des éléments de fixation (13), par rapport auxquels un rebord (14) peut être fixé provisoirement pour empêcher l'accouplement des chiennes (4).
